# EUROPEAN PATENT SPECIFICATION

(11) **EP 4 308 768 B1**
(45) Date of publication and mention of the grant of the patent: **30.07.2025**
(21) Application number: 23721828.4
(22) Date of filing: 21.03.2023
(51) Int. Cl.: E03C 1/08, E03C 1/084

(54) **DEVICE FOR WATER SAVINGS WITH ADJUSTABLE MECHANISM OF FLOW REGULATION**
VORRICHTUNG ZUR WASSEREINSPARUNG MIT EINSTELLBAREM MECHANISMUS ZUR STRÖMUNGSREGELUNG
DISPOSITIF D'ÉCONOMIE D'EAU À MÉCANISME RÉGLABLE DE RÉGULATION D'ÉCOULEMENT

(30) Priority: 21.03.2022 CZ 20220013
(43) Date of publication of application: 24.01.2024
(73) Proprietor: Bozek, Radomir, 66451 Slapanice (CZ)
(72) Inventor: Bozek, Radomir, 66451 Slapanice (CZ)
(74) Representative: Benda, Tomas
(86) International application number: PCT/CZ2023/000011
(87) International publication number: WO 2023/179807

(56) References cited:
- CN-A- 113 557 382
- CZ-U1- 17 735
- DE-U1- 202010 016 867
- NL-A- 7 108 545
- TW-A- 202 129 182
- TW-B- I 722 765
- US-A- 2 785 881

## Description

### Technical field

The invention relates to water saving device for water taps.

### State of the art

Due to the ever-increasing costs of water, there are water saving devices combined with so called perlators. The aim is to let pass only such amount of water through the tap which is needed for an effective wash. This is mainly used in places where the user does not pay for water and has no motivation to save water. These are public buildings, hotels, hospitals, public sanitary facilities, etc. However, it can also be used very well at home, especially when children or other people have not developed economical water consumption habits or they cannot adjust the water flow sensitively enough. They can then, for example with a lever tap, conveniently run the water at full volume, but only a predetermined maximum flow rate will flow.

From utility model CZ 17735 U1, a device for water saving is known with a small basket having a permeable bottom with an opening in the middle from which beam ribs extend and the wall is weakened at the top so that between the bottom wall and the top wall an inclined plane is formed. On this inclined plane support ring abuts, which taper at its bottom to form an outer inclined seating surface. Through the opening in the support ring the distribution element is pushed by its convex collar, which is provided with a small teeth on the upper disc, whereas the convex collar is then arranged at the bottom of the basket and from above on the support ring a regulator is seated, which has a tubular projection upwards in the centre for accommodating the pin of the sieve, and around this tubular projection a circular groove with a perforated bottom is provided, the perforation is made from short grooves arranged in a circle. A rubber ring can be placed in the circular groove as a flow rate control.

All elements mentioned are in a compact assembly and in the cavity of the basket. The entire basket is then placed in an end sleeve that is screwed onto the outlet of the water tap. The water flows through the groove in the regulator, then through the gaps in the circular toothing of the distributor element housed in the support ring, and on its convex collar the stream acquires a tubular hollow shape. In this way, the flow reaches the bottom of the basket where it acquires pearlation.

From the document DE 20 2010 016867 U1 a regulation part insert for deposit into a tap is known which consists of a basket in the centre of which a regulation element provided with teeth with bevelled surfaces is placed, on which a control button extends from below, which can rotate the regulation element and thus heighten or lower its position. A spring is seated on the regulation element, which is supported at the opposite end by a regulation sleeve, with a diffuser and a flow restrictor below the sleeve. The adjustment is performed by means of the control button which determines the tension on the spring and thus the relative position of the diffuser and the regulation element.

From the document NL 7 108 545 A a perlator for the distribution of the water flow is known, where a basket is arranged in the end of the tap, in the upper toothing of which a regulation element with a stem is placed, which is fixed in a perlation ball. Above the regulation element is a sieve provided with openings through which water passes over the regulation element and flows around its stem to the top of the perlation ball and around the sides of the perlation ball to form an aeration stream.

From the document US 2,785,881 a regulation valve insert located in the end of the tap is known wherein an assembly of a filter, a perforated plate, a gasket and an inlet upper dosing element in the form of a hat with openings is placed, all the parts having center openings, through which a control lever is protruded and it extends from the tap and at the top the control lever is housed in said inlet upper dosing element, so that by manipulating the control lever the flow of water from the dosing element into the center openings of each part of the assembly and the water then flows along the lever and falls onto the sieve and then out of the tap. A regulation screw is arranged on the side leaning on the control lever to adjust the range of permanent tilt of the lever and so predetermined amount of water flow.

From the document TW202129182 A a regulation insert is known which consists of a basket with a central opening in which a regulation element is placed provided with teeth with bevelled surfaces, on which a regulation screw with projections abuts from below, and by turning it, it is possible to heighten or lower the position of the spraying sleeves and through these sleeves water then flows through the basket around the central opening with the regulation screw.

The aim of the invention is to introduce a device of the above type, which, however, additionally allows multi-stage flow regulation without disassembling, simply by manipulating the mechanism from the bottom of the device.

### Summary of the invention

The above mentioned deficiencies are eliminated by a device for water savings with adjustable mechanism of flow regulation according to the invention, which is characterised by the fact that the basket is elongated, has a permeable bottom with an opening in the middle, which is located in a reinforced ring, wherein in the opening the adjustment regulator is seated by its bottom shank, which consists of an upper shank, and between the bottom shank and the upper shank an adjustment element in the form of a pair of ramp segments is provided which are arranged opposite each other, each of which occupies a circular sector of up to 90°, wherein the upper surfaces of the ramp segments are shaped so, that at the beginning of their lead have they have a starting edge and at the end of the lead they have a lifting end edge, wherein the two starting edges and the end edges are on the ramp segments arranged mirror opposite each other and bottom surfaces of the segments are flat, wherein on segments two ramp segments abut from above provided on the lower face of a collar of the distribution element, which are arranged opposite each other and each of them occupies a circular sector of up to 180°, wherein the ramp segments are shaped so, that at the beginning of their lead they have a starting edge and at the end of their lead they have a lifting end edge, wherein the two starting edges and the ending edges are on the segments arranged mirror opposite each other, wherein the neck is extended to a length of at least 2,5 mm and the upper disc is provided with a toothing with a lower chamfer, wherein two opposing elongated teeth are protruding from the circumference of the toothing, wherein the distribution element is pushed through the opening in the support ring, and then his convex collar protrudes out of the ring, and the convex collar is arranged in the assembly at the bottom of the basket, wherein along outer length of the also extended wall of the support ring an outer groove is provided for insertion into two ribs on the inner circumference of the basket and along the length of the inner wall there is an inner guide groove, for guiding the opposite elongated teeth a the toothing on the upper disc of the distribution element, wherein the internal inclined seating surface corresponds in shape and size to the lower chamfer.

In a preferred embodiment, there are on the lower surfaces of the ramp segments projections regularly spaced and on each segment at least two projections which co-engage with the grooves provided on the upper surface of the reinforced ring at the bottom of the basket, wherein the projections are compatible in shape with the grooves.

In another preferred embodiment the regularly spaced projections are ten and the co-engaging grooves (55) are sixteen.

In another preferred embodiment in the area around the central opening, two opposite grooves are provided in the distributon element, the length of which occupies a circular sector longer than 90° and the circular sector of the groove is longer by the thickness of the stop protrusion provided at the base of the upper shank, which is movably accommodated in the groove.

In another preferred embodiment is the lower shank provided with a control slot.

In another preferred embodiment is the upper disc provided with a cavity in the middle.

In another preferred embodiment is the bottom of the basket made of a flexible material capable of deflection at higher water pressure.

### Brief description of drawings

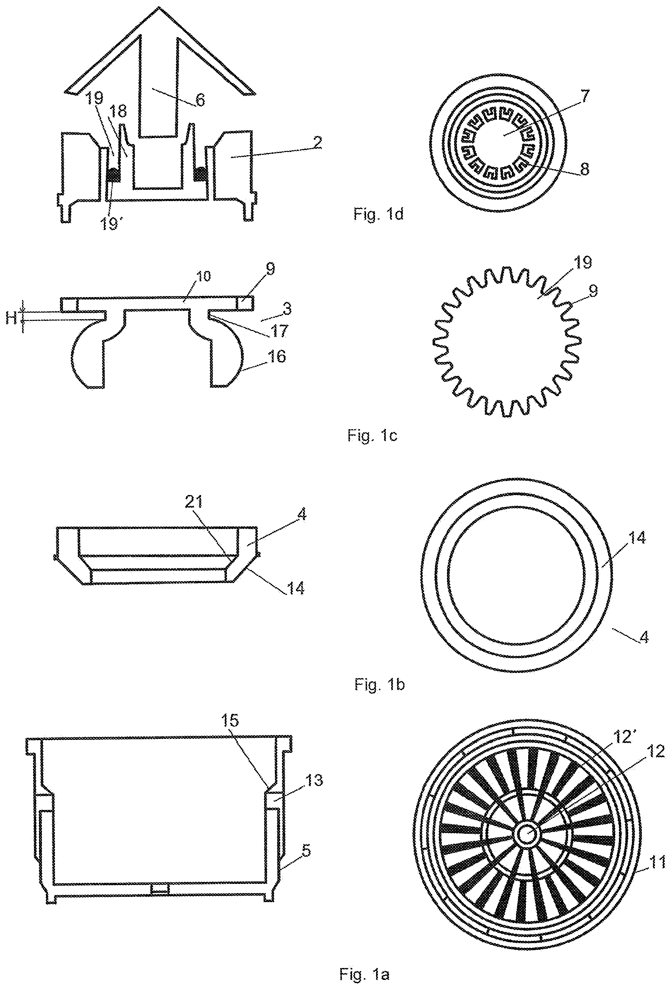

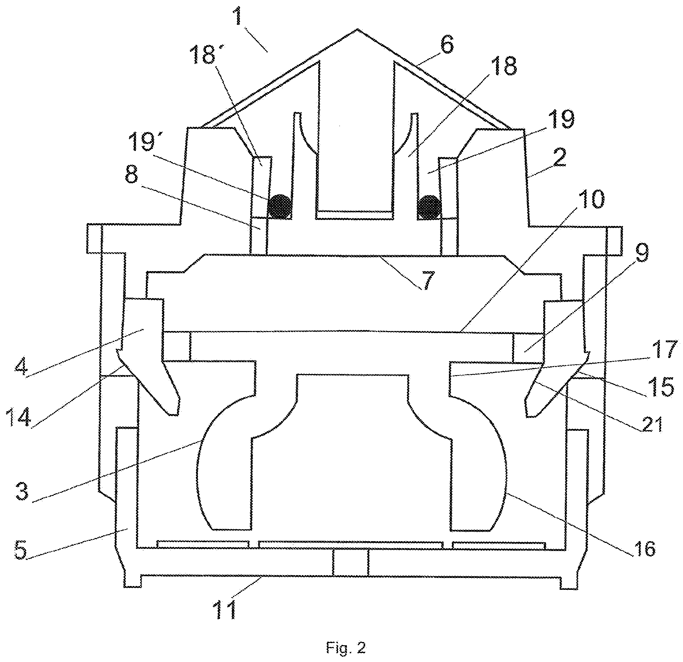

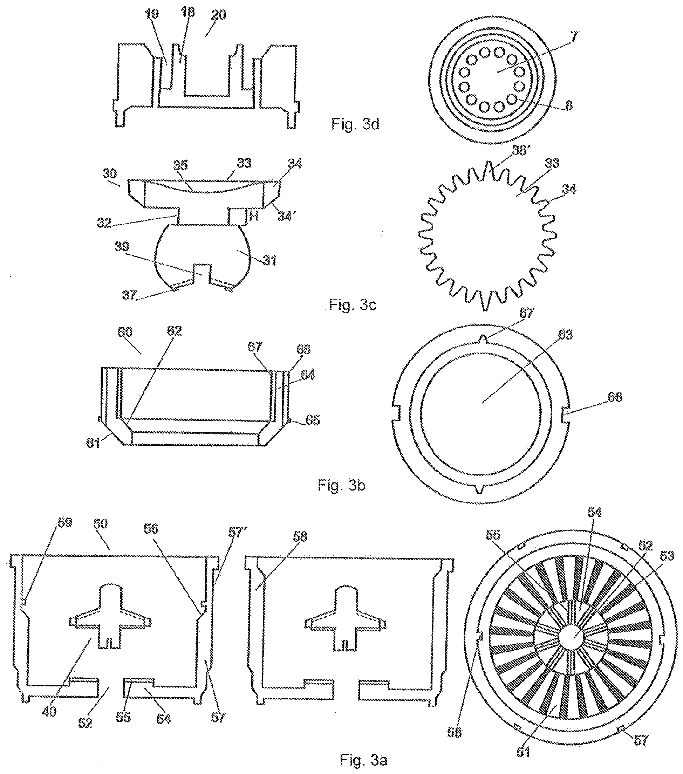

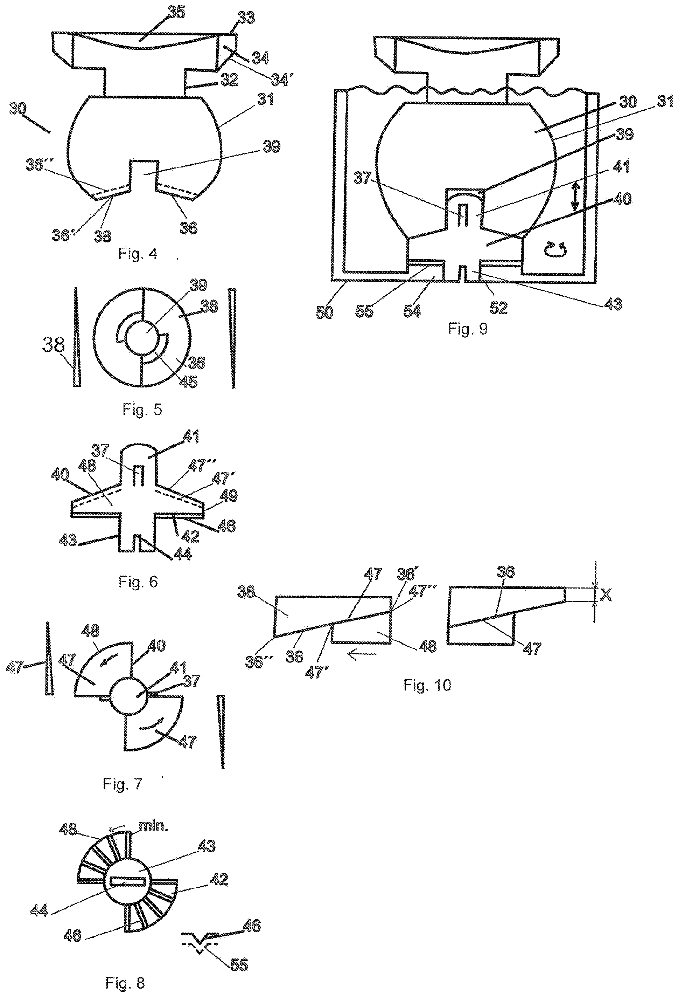

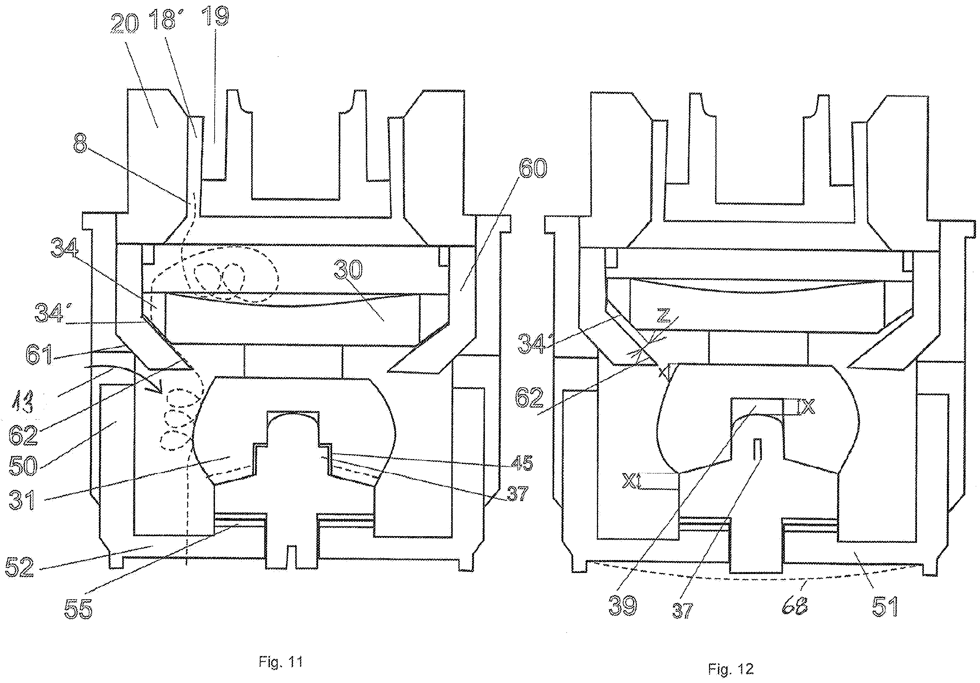

The invention will be further described using drawings, where Fig.1 shows an exploded view with individual components comprising a water-saving device according to the state of the art, Fig. 2 is a schematic section of a device according to the invention in an assembly for accommodating into an end sleeve at the outlet of a water tap, Fig. 3 is an exploded view of components comprising the water saving device according to the invention, Fig.4 is a schematic section of a distribution element according to the invention, Fig. 5 is a view of the distribution element from Fig.4 from below, Fig.6 is a schematic section of an adjustment regulator according to the invention, Fig.7 is the view of the adjustment regulator from Fig.6 from above, Fig.8 is a view of the adjustment regulator from Fig.6 from below, Fig.9 is a schematic section of the assembly of the basket, distribution element and adjustment regulator, Fig.10 is a schematic representation of the interaction of the ramp segments of the distribution element and the adjustment regulator, Fig.11 is a schematic cross-section of the device according to the invention in the assembled state before it is accommodated in the end sleeve of the water tap when the minimum water flow is allowed, Fig.12 is a schematic cross-section of the device according to the invention in the assembled state when maximum water flow is allowed.

### Detailed description of the invention

Fig. 1 shows an exploded view of the components of which water saving device according to the state of the art consists. On the left there are schematic cross-sections of the individual components and on the right there are views of the respective components from above or from below. The individual components will be described from the bottom upwards of the figure.

In Fig. 1 below a basket 5 into which the other components are inserted is shown and which is the supporting element of the whole assembly. As can be seen on the right in the bottom view, the basket 5 has a permeable bottom 11 with a small opening 12 in the middle from which the beam ribs 12' extend and the wall is weakened at the top so that between the bottom wall and the top wall an inclined chamfer 15 is formed.

On this inclined chamfer 15 a support ring 4 abuts, which tapers at its lower part to form the outer inclined seating surface 14, which abuts on the inclined chamfer 15. From inside there is an inner inclined seating surface 21. The upper disc of the distribution element 3 is seated on it by its toothing 9. On the left is a view of the support ring 4 also from below.

Through the opening in the support ring 4 the distribution element 3 is pushed, which then protrudes out of the ring 4 by its convex collar 16, and as it can be seen in the illustration on the right in the top view, the distribution element 3 on the upper disc 10 is provided with a fine toothing 9, wheras the convex collar 16 is then arranged in the assembly in the bottom part of the basket 5. An important structural element is a connecting neck 17 between the upper disc 10 and the convex collar 16. In the embodiment according to the state of the art, the length H of the neck 17 is about 1.5 mm. The neck 17 is thus very short.

A regulator 2 is seated on the support ring 4 from above, and it has a tubular protrusion 18 in the middle towards the top to accommodate the pin of a sieve 6 and around this tubular protrusion 18 a circular groove 19 with a perforated bottom 7 is provided, wherein the perforation 8 is made of short grooves arranged in a circle. This can be seen in the illustration in the view from the bottom right. In the circular groove 19 one or two rubber rings 20 may be accommodated as the flow control.

Fig. 2 then shows all the components from Fig. 1 in a compact assembly and in the cavity of the basket 5. The entire basket 5 is then placed into the unshown end sleeve, which is screwed onto the outlet of the water tap. The water flows through the groove 19 in the regulator 2, respectively around the ribs 18a on its circumference, and then through the perforated bottom 7, then through gaps in the circular toothing 9 of the distributing element 3 accommodated in the support ring 4 to its inner inclined seating surface 21 and on its convex collar 16 the flow acquires a tubular hollow shape. And here a suction is created and thanks to the ventilation openings on the side of the basket, the water flow creates a suction, the water flow sucks air to mix it with water, thus creating an intense pearlation. In the device described, the possibility of regulating the flow consists only in seating one rubber ring 20 in the groove 19 in the regulator 2 and, if the flow had to be further restricted, another rubber ring is added. However, when installing another rubber ring, the end sleeve of the water tap would always have to be released.

More space has been devoted to this description, since the invention uses substantially all of the above mentioned components, but an additional very important component is added to enable the regulation of the flow and design changes are provided to some of the components to modify this known assembly to obtain the device, which will have further substantial improvements which will enable the flow to be regulated in a relatively large range without having to release the end sleeve of the water tap and the regulation can be performed even during water is flowing and the changes in flow can be visually observed. These design modifications will change the functionality of the device while ensuring easy operation.

Fig. 3 shows an exploded view of the individual components of which the water saving device according to the invention consists. On the left there are schematic sections of the individual components and on the right there are views of the respective components from above or from below. The individual components will be described from the bottom of the figure.

In Fig. 3 at the bottom the basket 50 into which the other components are inserted and which is the supporting element of the whole assembly is shown. As can be seen on the far right in the top view, the basket 50 has a permeable bottom 51 with an opening 52 in the middle. The opening 52 is located in a reinforced ring 54 on which the grooves 55 are arranged at regular intervals and from which the beam ribs 53 extend. In the figure on the far left, it can be seen that the wall is weakened at the top so that between the lower rib 57 and the upper wall 57' an inclined chamfer 56 is formed.

However, the depth of the basket 50 is greater than in the state of the art because the length of the ribs 57 and walls 57' is also longer and the inclined chamfer 56 is arranged further from the bottom 51. The length of the ribs 57 is longer because the adjustment regulator 40 is seated into the opening 52. This is a completely new element compared to the state of the art and therefore space must be provided for it. In the figure on the right, which is a view inside the basket 50, it can be seen that the lower ribs 57 are four and are completed around the inner circumference of the basket 50 by two long ribs 58. These are opposite to each other, and between them there are always two lower ribs 57 at regular intervals. The long ribs 58 serve as guides for the grooves 66 provided along the length of the outer wall 64 of the support ring 60. This adjustment of the support ring 60 in the basket 50 is important, because along the length of the inner wall 64, there is a further guiding groove 67 in which the toothing 34 of the distribution element 30 is guided by its opposing long teeth 38'. This possibility of defined adjustment between the basket 50, the support ring 60 and the distribution element 30 is important so that the relative orientation of the distribution element 30 and of the adjustment regulator 40 does not have to be considered during assembly, so that at any given time the ramp segments 48 and 38, which affect the flow control, are suitably oriented against each other.

On said inclined chamfer 56 the support ring 60 is seated and tapers at its lower part to form an outer inclined seating surface 61 which is seated on the inclined chamfer 56. There is then an inner inclined seating surface 62 on the inside. The upper disc 33 of the distribution element 30 is seated on this by its toothing 34 and chamfer 34' respectively. The wall 64 above the inclined seating surfaces 61 and 62 is also longer than that of the support ring 4 according to the state of the art. This is because the adjustment regulator 40 allows the distribution element 30 to be raised by at least 2,5 mm and therefore the wall 64 must be longer by this dimension. On the left is a top view of the support ring 60.

Through an opening in the support ring 60 the distribution element 30 is pushed, which by means of its protruding collar 31 then extends outwardly from the ring 60, and as can be seen in the illustration on the right in the top view, the distribution element 30 is provided on the upper disc 33 with a toothing 34 with a lower chamfer 34', whereas the protruding collar 31 is arranged in the assembly in the bottom part of the basket 50. An important structural element is the connecting neck 32 between the upper disc 33 and the convex collar 31. In the embodiment according to the invention, the length H of the neck 32 is about 2.5 mm. The neck 32 is therefore relatively long, at least 2.5 mm compared to 1.5 mm according to the state of the art. The toothing 34 has a chamfer 34', in contrast to the state of the art, as it is a further element regarding water flow control. In the base position, the toothing 34 is supported by its chamfer 34' on the inner inclined seating surface 62. When the distribution element 30 is raised, the gap between the chamfer 34' of the toothing 34 and the inner inclined seating surface 62 increases. This will be evident in relation with Fig. 11 and 12.

From above on the support ring 60 the regulator 20 is seated, which has a tubular protrusion 18 in the centre upwards for accommodating the pin of the unshown sieve, and around this tubular protrusion 18 a circular groove 19 with a perforated bottom 7 is provided, wherein the perforations 8 is made of small openings arranged in a circle. This can be seen in the illustration in the view from the bottom right. In the circular groove 19, it is no longer necessary to store rubber rings 19', as it is the case in the state of the art, since the flow control is carried out at the contact points of the elements arranged below.

On the upper walls 57' inner circumference projections 59 are arranged and on the outside of the wall 64 at the bottom a ring 65 is arranged. When the support ring 60 is pushed into the basket 50, the ring 65 is pushed through the projections 59 and thus the support ring 60 is secured against being pushed upwards out of the basket 50 due to water pressure.

Fig. 4 shows a distribution element 30 according to the invention. It consists of a convex collar 31 from which an elongated neck 32 protrudes at the top and on which an upper disc 33 is arranged, which is around its circumference provided with the toothing 34 with a chamfer 34' and in the middle it is provided with a cavity 35. The collar 31 is provided with a central opening 39 on the lower front 36.

Fig. 5 is a view of the bottom face 36 of the convex collar 31. It can be seen that the bottom face 36 is provided with two ramp segments 38 which are arranged opposite each other and each of which occupies an area of up to 180°, so that they cover an area of up to 360° of the total area of the bottom face 36 of the collar 31 when viewed from below. The ramp segments 38 are shaped so, that they have a starting edge 36' at the beginning of their lead and a lifting end edge 36" at the end of their lead. This will be explained with reference to Fig. 10. The central opening 39 is also visible. The development of the ramp surfaces of the segments 38 is schematically indicated at the rims of the figure. In the area around the central opening 39 two opposite grooves 45 are provided, the length of which occupies a circular sector slightly longer than 90°. The circular sector is longer by the thickness of the stop protrusion 37.

This stop protrusion 37 can be seen in Fig. 6 and also that it is arranged at the base of the upper shank 41. This is a schematic section of the adjustment regulator 40 according to the invention. This comprises an upper shank 41, a lower shank 43 with an control slot 44, and a adjustment element 49 in the form of ramp segments 48 between them. These are arranged opposite each other and each of them occupies an area of 90°, so that they cover an area of 180° of the total area of 360° of the regulator 40, as seen from above. The upper surfaces 47 of the ramp segments 48 are shaped to have a starting edge 47' at the beginning of their lead and a lifting end edge 47" at the end of their lead, both the starting edges and the end edges are on the segments arranged mirror opposite each other. This can be seen again in Fig. 10. The lower surfaces 42 of the segments 48 are flat. Shown projections 46 will be commented in relation with Fig. 8.

Fig. 7 is a top view of the adjustment regulator 40. Two ramp segments 48 are arranged opposite each other, each occupying an area of 90° so they cover an area of 180° of the total imaginary upper area 360° of the regulator 40 as viewed from above. At the base of the upper shank 41, stop protrusions 37 are symmetrically opposed to each other. These can then moved in the grooves 45 by rotation of the adjustment regulator 40. They are used to prevent over-rotating of the regulator 40 after it is rotated by 90°. The grooves 45 are therefore slightly longer by the thickness of the stop protrusion 37, i.e. to allow the rotation for full 90° while still allowing space in the groove for complete turning to abut the stop protrusion 37 to the end of the groove. Likewise, as a stop, the stop protrusion 37 serves to stop the rotation of the regulator when returning to the base position. The development of the ramp surfaces is again schematically indicated on the rims of the figure.

Fig.8 shows a view of the adjustment regulator 40 from below. Two ramp segments 48 are seen arranged opposite each other, each occupying an area of substantially 90°, so that they cover an area of 180° of the total imaginary bottom area 360° of the regulator 40 when viewed from below. The flat lower surface 42 of the ramp segments 48 is provided with projections 46 which are triangular in section. The projections 46 are regularly spaced along the lower surface 42 of the ramp segments 48 and there are five projections on each segment 48. These fit into grooves 55 in the reinforced ring at the bottom of the basket 50. The significance of the interaction of the projections 46 and the grooves 55 will be discussed below. When the periphery projection 46 marked min. is seated in the periphery groove 55, then the flow will be the most reduced and may have four more stages to achieve the largest flow when the same projection 46 is seated in the end groove 55. The schematic partial section indicates how the projections 46 and the grooves 55 are compatible in the shape. The interaction of the grooves 55 and the projections 46 ensures that the regulator 40 does not rotate spontaneously and thus changes in flow due to water pressure do not occur spontaneously. To keep the grooves 55 and the projections 46 engaged with each other, the cavity 35 on the upper disc 33 serves, because a beam of water is forced into it and the regulator 40 is pressed into the basket 50. The controlled change in flow occurs by mechanically turning the bottom shank 43 when the water stops, since at that point the regulator 40 can be easily lifted and turned to another desired position.

Fig. 9 shows a schematic section of the assembly of the basket 50, the distribution element 30 and the adjustment regulator 40. It can be seen how the upper shank 41 fits into the central opening 39 on the lower face of the convex collar 31 and the ramp segments 38 on the lower face of the convex collar 31 engage the ramp segments 48 of the adjustment regulator 40. And it can be seen how on the reinforced ring 54 of the basket 50 the adjustment regulator 40 is seated with its lower surface.

As indicated in the assembly of the adjustment regulator 40 disposed in the basket 50 and the distribution element 30 arranged above it, the adjustment regulator 40 is rotatably disposed in the basket 50 in its central opening 52 around which the central reinforced support ring 54 is arranged by its bottom shank 43. As indicated by the lower arrow, the adjustment regulator 40 is only rotatable in both directions. And as indicated by the arrow above, the distribution element 30 moves up and down, according to the sense of rotation of the adjustment regulator 40.

Fig. 10 explains the interaction between the lead of the ramp segments 38 on the lower face of the collar 31 of the distribution element 30 and the lead of the ramp segments 48 on the adjustment regulator 40. In the illustration, the leads are extended in a plane, but are actually curved like the leads of the helix segment. In the figure on the left, the beginning of the common lead engagement is indicated. When assembled in the base position, the lead of the ramp segments 38 at the collar 31 and the lead of the ramp segments 48 at the adjustment regulator 40 are placed mutually so, that the ramp segments 48 slide only on the upper half of the ramp segments 38.

Ramp segments 48 of the adjustment regulator 40 and the ramp segments 38 of the collar 31 are arranged as follows: The ramp segments 48 of the adjustment regulator 40 occupy, in the initial position, half of the lead path of the ramp segments 38 of the collar 31. The stroke takes place on the other half of the lead path of the ramp segments, see figure on the right - and the stroke distance is denoted as x. The development of the ramp surfaces is schematically indicated in the rims of Fig. 5 and 7.

As the bottom shank 43 begins to rotate, the ramp segments 48 at the adjustment regulator 40 begin to move along the lead of the second half of the lead path of the ramp segments 38 at the collar 31 as indicated by the arrow. This movement lifts through the ramp segments 38 the entire collar 31 until the starting edges 47' are below the end edges 36" of the ramp segments 38 of the collar 31, which does not rotate, but merely moves upwards. When the 90° lead stroke is completed, the end edge 36" of the ramp segment 38 of the collar 31 is above the starting edges 47' of the ramp segment 48 of the adjustment regulator 40.

By rotating the ramp segments 48, the ramp segments 38 are raised by a distance x. When rotating, the stop protrusions 37 are also raised. The height of the stop protrusions 37 must therefore be slightly higher than the distance x of the stroke, so that even in the final phase of rotation of the adjustment regulator 40 it can rest firmly on the end of the groove 45 and thus prevent unwanted over-rotation of the adjustment regulator 40.

In Fig 11 shows a schematic cross-section of all the components of Fig. 3 in a compact assembly and in the cavity of the basket 50 at a minimum flow. The entire basket 50 is then accommodated into the unshown end sleeve, which is screwed onto the outlet of the water tap. As indicated by the dashed line, water flows through the groove 19 and around the ribs 18' in the regulator 20, and then through the perforated bottom 7 through the perforation 8. The water then falls on the upper disc 33 into the cavity 35, where it is curled, and then the stream so curled flows between the teeth of the circular toothing 34 and around the chamfer 34' and around the internal inclined seating surface 62 of the support ring 60, and from here then falls on the convex collar 31, where the flow acquires a tubular hollow shape.

Air is sucked in through the openings 70, a pearling occurs, and the flow thus formed hits the bottom 51 of the basket 50, and flows out through the gaps between the ribs 53. Between the chamfer 34' and the inner inclined seating surface 62 of the support ring 60, there is only a small gap. It can be clearly seen here how the stop protrusion 37 is guided in the groove 45.

Fig. 12 then shows all of the components from Fig. 3 in a compact assembly and in the basket cavity 50, but at maximum flow. The adjustment regulator 40 is rotated by 90° and the ramp paths on the upper surfaces of the ramp segments 48 maximally raise the ramp segments 38 at the collar 31. Thus, the collar 31 and the entire distribution element 30 are raised by a distance x. The central opening 39 is also raised by the same distance x, but in particular the upper disc 33 with the toothing 34 and the chamfer 34', so that a gap z is created between the toothing champfer 34' and the internal inclined seating surface 62 of the support ring 60. This will allow a much greater flow of water.

Returning to Fig. 8, there can be seen five projections 46 on the lower surface 42 of the segments 48 of the adjustment regulator 40 spaced regularly at five positions within the quarter circle. Fig. 3 shows on the reinforced ring 54 regularly spaced grooves 55 and within these grooves the aforementioned projections 46 are placed. There are sixteen grooves 55 and ten projections 46. Fig. 11 shows the basic situation where all ten projections 46 are disposed in their ten starting grooves 55. This is the most reduced flow rate.

When the adjustment regulator 40 is rotated by 90°, all ten projections 46 are seated in their ten end grooves 55, and meanwhile four rotations of the adjustment regulator 40 can be performed, when the adjustment regulator 40 is shifted by one projection 46 to control the flow. Each rotation means a slight lifting of the collar 31 of the distribution element 30. With four turns, the maximum stroke x of the distribution element 30 is enabled due to the elongated connecting neck 32, thus to the maximum flow rate. In order to prevent over-rotating, the protrusions 37 abut the end of the groove 45.

With the described device, the flow rate can be regulated in several stages, in the presented case in five, in a very simple way, without releasing the whole device from the water tap sleeve. It is, of course, possible to have a coarser regulation, e.g. in three or even in two stages with a corresponding number of grooves and protrusions. Only the turning the adjustment regulator 40 is necessary.

As a final inventive feature, the bottom 52 is made of a flexible material and when high water pressure hits the upper disc 33, the entire distribution element 30 is forced down against the bottom 52 causing it to bulge as indicated. At that point, the dimension z is also choked and the flow rate is reduced. This is an effective measure particularly in the case of multi-storey houses, for example hotels, where the water pressure towards the higher floors is lowered. In the case of peak consumption times, e.g. in the morning when many guests také shower and flush toilets, without this choking, insufficient pressure would be on the upper floors. And with the choking, the water pressure is maintained at the normal level on the upper floors as well.

### Industrial applicability

The device according to the invention can be used wherever it is necessary to save water and, in particular, to regulate smoothly the required flow rate. It can also be advantageously installed, for example, in high buildings where there are different water pressures in the lower and upper floors. Thanks to the flexible bottom, there is no need to set a different flow rate on each floor, as all devices can be set to the same flow rate thanks to the abovementioned choking. This is therefore a self-regulating effect.

Taps or lever taps can be conveniently run at full capacity using the device, wherein only a predetermined maximum flow will be adjusted. The device prevents limescale formation and saves water and energy for hot water production.

## Claims

1. Device for water savings combinable with perlators with adjustable mechanism of flow regulation comprising a basket (50) provided with peripheral opening (13) for air suction, and on the inner circumference with a seating ribs with inclined chamfer, on which in the basket a support ring (60) is arranged, on the internal inclined seating surface of which an upper disc of a distribution element (30) is seated, and a neck with a convex collar is pushed through the opening in the support ring (60), wherein on top of the support ring (60) a regulator (20) is seated, having a tubular protrusion (18) upwards in the middle to accommodate a pin of a sieve (6) and around this tubular protrusion (18) a circular groove (19) with a perforated bottom (7) is provided, **characterized in that** the basket (50) is elongated, has a permeable bottom (51) with an opening (52) in the middle, which is located in a reinforced ring (54), wherein in the opening (52) an adjustment regulator (40) is seated by its bottom shank (43), which consists of an upper shank (41), and between the bottom shank (43) and the upper shank (41) an adjustment element in the form of a pair of ramp segments (48) is provided which are arranged opposite each other, each of which occupies a circular sector of up to 90°, wherein an upper surfaces (47) of ramp segments (48) are shaped so, that at the beginning of their lead they have a starting edge (47') and at the end of the lead they have a lifting end edge (47"), wherein the two starting edges and the end edges are on the ramp segments (48) arranged mirror opposite each other and bottom surfaces (42) of the segments (48) are flat, wherein on segments (48) two ramp segments (38) abut from above provided on a lower face (36) of a collar (31) of the distribution element (30), which are arranged opposite each other and each of them occupies a circular sector of up to 180°, wherein ramp segments (38) are shaped so, that at the beginning of their lead they have a starting edge (36') and at the end of their lead they have a lifting end edge (36"), wherein the two starting edges and the ending edges are on the segments arranged mirror opposite each other, wherein the neck (32) is extended to a length (H) of at least 2,5 mm and the upper disc (33) is provided with a toothing (34) with a lower chamfer (34'), wherein two opposing elongated teeth (38') are protruding from the circumference of the toothing (34), wherein the distribution element (30) is pushed through the opening in the support ring (60), and then his convex collar (31) protrudes out of the ring (60), and the convex collar (31) is arranged in the assembly at the bottom of the basket (50), wherein along outer length of the also extended wall (64) of the support ring (60) an outer groove (66) is provided for insertion into two ribs (58) on the inner circumference of the basket (50) and along the length of the inner wall (64) there is an inner guide groove (67), for guiding the opposite elongated teeth (38') a the toothing (34) on the upper disc (33) of the distribution element (30), wherein the internal inclined seating surface (62) corresponds in shape and size to the lower chamfer (34').

2. Device according to claim 1, **characterized in that** on the lower surfaces (42) of the ramp segments (48) there are projections (46) regularly spaced and on each segment (48) there are at least two projections (46) which co-engage with the grooves (55) provided on the upper surface of the reinforced ring (54) at the bottom of the basket (50), wherein the projections (46) are compatible in shape with the grooves (55).

3. Device according to claim 2, **characterized in that** the regularly spaced projections (46) are ten and the co-engaging grooves (55) are sixteen.

4. The device accorfing to claim 1, **characterized in that** in the area around the central opening (39), two opposite grooves (45) are provided in the distributon element (30), the length of which occupies a circular sector longer than 90° and the circular sector of the groove (45) is longer by the thickness of the stop protrusion (37) provided at the base of the upper shank (41), which is movably accommodated in the groove (45).

5. The device according to claim 1, **characterized in that** the lower shank (43) is provided with a control slot (44).

6. The device according to claim 1, **characterized in that** the upper disc (33) is provided with a cavity (35) in the middle.

7. Device according to claim 1, **characterized in that** the bottom (52) of the basket (50) is made of a flexible material capable of deflection at higher water pressure.

## Patentansprüche

1. Wasserspareinrichtung mit einstellbarem Durchflussregelmechanismus, bestehend aus einem Becher (50), der am Umfang mit Lufteinlasslöchern (13) und am inneren Umfang mit schräg anliegenden Sitzrippen versehen ist, auf dem ein Stützring (60) in dem Becher angeordnet ist, auf dessen innerer geneigter Sitzfläche die obere Scheibe des Verteilerelements (30) angeordnet ist, und ein Hals mit einem vorstehenden Kragen durch das Loch in dem Stützring (60) eingesetzt ist, wobei auf dem Tragring (60) von oben ein Regler (20) sitzt, der in der Mitte nach oben einen rohrförmigen Vorsprung (18) zur Aufnahme des Stiftes des nicht dargestellten Siebes (6) aufweist, und um den rohrförmigen Vorsprung (18) herum eine kreisförmige Nut (19) mit einem durchbrochenen Boden (7) angebracht ist, **dadurch gekennzeichnet, dass** der Becher (50) länglich ist, einen durchlässigen Boden (51) mit einem Loch (52) in der Mitte aufweist, das sich in einem verstärkten Ring (54) befindet, wobei das Loch (52) mit einem Anschlagregler (40) versehen ist, der aus einem oberen Schaft (41) mit seinem unteren Stellglied (43) besteht, und zwischen dem unteren Betätigungselement (43) und der oberen Spindel (41) ein Anschlagelement in Form eines Paares von Rampensegmenten (48) vorgesehen ist, die einander gegenüberliegend angeordnet sind und von denen jedes eine Kreisfläche von bis zu 90° einnimmt, wobei die Oberseiten (47) der Rampensegmente (48) so geformt sind, dass sie eine Anfangskante (47') am Beginn ihrer Teilung und eine anhebende Endkante (47") am Ende ihrer Teilung aufweisen, wobei die beiden Anfangskanten und die Endkanten spiegelbildlich zueinander an den Segmenten (48) angeordnet sind und die Unterseiten (42) der Segmente (48) eben sind, wobei die Segmente (48) von zwei an der Unterseite (36) des Kragens (31) des Spaltgliedes (30) ausgebildeten Vorderkantensegmenten (38) von oben überlappt werden, die einander gegenüberliegend angeordnet sind und jeweils eine Kreisfläche von bis zu 180° einnehmen, wobei die Vorderkantensegmente (38) so geformt sind, dass sie am Beginn ihrer Teilung eine Anfangskante (36') und am Ende ihrer Teilung eine abhebende Endkante (36") aufweisen, wobei die beiden Anfangskanten und die Endkanten an den Segmenten spiegelbildlich zueinander angeordnet sind, wobei der Hals (32) in der Länge (H) auf mindestens 2,5 mm verlängert ist und die obere Scheibe (33) mit einer Verzahnung (34) mit einer unteren Fase (34') versehen ist, wobei zwei gegenüberliegende längliche Zähne (38') vom Umfang der Verzahnung (34) abstehen, wobei das Spaltelement (30) durch ein Loch in dem Stützring (60) geschoben wird und sich dann mit seinem vorstehenden Kragen (31) von dem Ring (60) nach außen erstreckt, und der vorstehende Kragen (31) in der Anordnung am Boden der Schale (50) angeordnet ist, mit einer äußeren Nut (66) zum Einsetzen in zwei Rippen (58) am Innenumfang der Schale (50) entlang der Länge der äußeren, ebenfalls verlängerten Wand (64) des Stützrings (60) und einer inneren Führungsnut (67) entlang der Länge der inneren Wand (64), zur Führung gegenüberliegender länglicher Zähne (38') an der Verzahnung (34) an der oberen Scheibe (33) des Trennelements (30), wobei die innere schräge Sitzfläche (62) in Form und Größe der unteren Abschrägung (34') entspricht.

2. Vorrichtung nach Anspruch 1, **dadurch gekennzeichnet, dass** an den Unterseiten (42) der Rampensegmente (48) in regelmäßigen Abständen Vorsprünge (46) und an jedem Segment (48) mindestens zwei Vorsprünge (46) vorhanden sind, die mit den an der Oberseite des verstärkten Rings (54) am Boden der Schale (50) ausgebildeten Nuten (55) zusammenwirken, wobei die Vorsprünge (46) mit den Nuten (55) formkompatibel sind.

3. Vorrichtung nach Anspruch 2, **dadurch gekennzeichnet, dass** die regelmäßig beabstandeten Vorsprünge (46) zehn und die zusammenwirkenden Rillen (55) sechzehn sind.

4. Vorrichtung nach Anspruch 1, **dadurch gekennzeichnet, dass** im Bereich um das zentrale Loch (39) zwei gegenüberliegende Nuten (45) in das Trennelement (30) eingearbeitet sind, deren Länge einen kreisförmigen Querschnitt von mehr als 90° einnimmt und der Querschnitt der Nut (45) um die Dicke eines Anschlagvorsprungs (37) länger ist, der an der Basis des oberen Schaftes (41) ausgebildet ist, der beweglich in der Nut (45) angeordnet ist.

5. Vorrichtung nach Anspruch 1, **dadurch gekennzeichnet, dass** das untere Stellglied (43) mit einem Betätigungsschlitz (44) versehen ist.

6. Vorrichtung nach Anspruch 1, **dadurch gekennzeichnet, dass** die obere Scheibe (33) in der Mitte mit einer Ausnehmung (35) versehen ist.

7. Vorrichtung nach Anspruch 1, **dadurch gekennzeichnet, dass** der Boden (52) des Bechers (50) aus einem flexiblen Material besteht, das sich bei höherem Wasserdruck verbiegen kann.

## Revendications

1. Dispositif d'économie d'eau avec mécanisme de régulation du débit réglable comprenant une coupelle (50) munie de trous d'entrée d'air (13) sur le pourtour et de nervures d'assise avec un ajustement incliné sur le pourtour intérieur, sur laquelle un anneau de support (60) est placé dans la coupelle, sur lequel un anneau de support (60) est disposé dans la coupelle, sur la surface d'assise inclinée intérieure de laquelle le disque supérieur de l'élément distributeur (30) est disposé, et un col avec une collerette saillante est inséré à travers le trou dans l'anneau de support (60), un régulateur (20) est posé sur l'anneau de support (60) par le haut et présente une saillie tubulaire (18) au centre vers le haut pour accueillir la broche du tamis non représenté (6), et une rainure circulaire (19) avec un fond perforé (7) est pratiquée autour de la saillie tubulaire (18), **caractérisé par le fait que la** coupelle (50) est allongée, ayant un fond perméable (51) avec un trou (52) au milieu, qui est situé dans un anneau renforcé (54), dans lequel le trou (52) est pourvu d'un régulateur d'arrêt (40) composé d'une tige supérieure (41) par son actionneur inférieur (43), et entre l'actionneur inférieur (43) et la tige supérieure (41), il y a un élément d'arrêt sous la forme d'une paire de segments de rampe (48) disposés l'un en face de l'autre, chacun d'eux occupant une zone circulaire allant jusqu'à 90°, dans lequel les surfaces supérieures (47) des segments de rampe (48) sont formées pour avoir un bord de départ (47') au début de leur rampe et un bord d'extrémité de levage (47") à la fin de leur rampe, les deux bords de départ et les bords d'extrémité étant disposés en miroir à l'opposé l'un de l'autre sur les segments (48) et les surfaces inférieures (42) des segments (48) étant planes, dans lequel les segments (48) sont recouverts par le haut par deux segments de bord d'attaque (38) formés sur la face inférieure (36) du col (31) de l'élément de fendage (30), qui sont disposés en face l'un de l'autre et dont chacun occupe une zone circulaire allant jusqu'à 180°, les segments de bord d'attaque (38) étant façonnés pour avoir un bord de départ (36') au début de leur pas et un bord d'extrémité de levage (36") à la fin de leur pas, dans lequel les deux bords de départ et les bords d'arrivée sont disposés sur les segments en miroir l'un par rapport à l'autre, dans lequel le col (32) est allongé en longueur (H) d'au moins 2,5 mm et le disque supérieur (33) est pourvu d'une dent (34) avec un chanfrein inférieur (34'), dans lequel deux dents allongées opposées (38') font saillie de la circonférence de la dent (34), dans lequel l'élément de fendage (30) est poussé à travers un trou dans l'anneau de support (60), puis s'étend vers l'extérieur de l'anneau (60) par son collet en saillie (31), et le collet en saillie (31) est disposé dans l'ensemble au fond de la coupelle (50), avec une rainure extérieure (66) pour l'insertion dans deux nervures (58) sur la circonférence intérieure de la coupelle (50) sur la longueur de la paroi extérieure également étendue (64) de l'anneau de support (60) et une rainure de guidage intérieure (67) sur la longueur de la paroi intérieure (64), pour guider des dents allongées opposées (38') sur la denture (34) du disque supérieur (33) de l'élément diviseur (30), la surface d'appui inclinée intérieure (62) correspondant à la forme et à la taille du chanfrein inférieur (34').

2. Le dispositif selon la revendication 1, **caractérisé en ce qu'il** y a des saillies (46) régulièrement espacées sur les surfaces inférieures (42) des segments de rampe (48) et au moins deux sur chaque segment (48) qui s'engagent dans les rainures (55) faites sur la surface supérieure de l'anneau renforcé (54) au fond de la coupelle (50), les saillies (46) étant compatibles avec la forme des rainures (55).

3. Le dispositif selon la revendication 2, **caractérisé en ce que** les saillies régulièrement espacées (46) sont au nombre de dix et que les rainures de coengagement (55) sont au nombre de seize.

4. Le dispositif selon la revendication 1, **caractérisé en ce que** dans la région autour du trou central (39), deux rainures opposées (45) sont réalisées dans l'élément diviseur (30), dont la longueur occupe une section circulaire supérieure à 90° et la section de la rainure (45) est plus longue que l'épaisseur d'une saillie de butée (37) réalisée à la base de la tige supérieure (41), qui est disposée de manière mobile dans la rainure (45).

5. Le dispositif selon la revendication 1, **caractérisé en ce que** l'actionneur inférieur (43) est pourvu d'une fente d'actionnement (44).

6. Dispositif selon la revendication 1, **caractérisé en ce que** le disque supérieur (33) est pourvu d'un creux (35) en son milieu.

7. Le dispositif selon la revendication 1, **caractérisé en ce que** le fond (52) de la coupelle (50) est fait d'un matériau flexible capable de se déformer à une pression d'eau plus élevée.
